# EUROPÄISCHE PATENTSCHRIFT

(11) **EP 0 457 031 B1**
(45) Veröffentlichungstag und Bekanntmachung des Hinweises auf die Patenterteilung: **13.09.1995**
(21) Anmeldenummer: 91105847.7
(22) Anmeldetag: 12.04.1991
(51) Int. Cl.: G01S 5/10

(54) **Gerät zur Bestimmung des Standortes**
Position determining device
Appareil pour déterminer la position

(30) Priorität: 18.05.1990 DE 4016025
(43) Veröffentlichungstag der Anmeldung: 21.11.1991
(73) Patentinhaber: ROBERT BOSCH GMBH, 70442 Stuttgart (DE)
(72) Erfinder: Tempelhof, Alfred, Dipl.-Ing., W-3200 Hildesheim (DE)

(56) Entgegenhaltungen:
- DE-A- 3 005 101
- US-A- 3 747 106
- US-A- 3 889 264

## Beschreibung

Die Erfindung geht aus von einem Gerät nach der Gattung des Hauptanspruchs.

Zur Ortung des Standortes eines Empfängers mittels Radiowellen sind verschiedene Verfahren bekannt - unter anderem eine Messung der Laufzeiten von Signalen verschiedener Sender. Bei den sogenannten Loran-C-Verfahren wird bei dem Empfang zweier Sender eine Hyperbel als möglicher Standort des Empfängers ermittelt. Durch Auswertung eines weiteren Senderpaares entsteht eine zweite Hyperbel, deren Schnittpunkt mit der ersten Hyperbel der Standort des Empfängers ist. Dabei sollten sich die Hyperbeln in Sinne einer möglichst genauen Bestimmung des Standortes möglichst orthogonal schneiden. Dieses Verfahren setzt voraus, daß die Sender die Signale synchron ausstrahlen. Bei der Nutzbarmachung von vorhandenen Radiosendern ist dieses jedoch mit erheblichem technischen Aufwand verbunden.

Aus der US 3,889,264 ist ein System zur Ortsbestimmung bekannt, bei dem mit Hilfe von drei Empfangskanälen eines Rundfunkempfängers die Isophasen-Linien von drei entsprechenden Sendern abgebildet werden. Bewegt sich ein Fahrzeug mit dem System über das Isophasen-Liniennetz, dann kann durch Zählen der übersprungenen Isophasen-Linien die aktuelle Position bestimmt werden, wenn eine Ausgangsposition bekannt war.

Das erfindungsgemäße Gerät mit den kennzeichnenden Merkmalen des Hauptanspruchs hat demgegenüber den Vorteil, daß ohne weitere senderseitige Maßnahmen Radiosender, die nach dem Prinzip des sogenannten Ballempfangs zusammengeschaltet sind, zur Ortsbestimmung verwendet werden können. Dabei werden größtenteils lediglich Baugruppen benötigt, die beispielsweise in einem modernen Autoradio der oberen Preisklasse ohnehin vorhanden sind. Dieses sind im einzelnen zwei Empfangsschaltungen, ein Mikrocomputer zur Steuerung und ein nichtflüchtiger Speicher, in welchem Daten der zu empfangenden Sender abgespeichert sind - wie beispielsweise Senderstandorte und die Zugehörigkeit zu einer Programmkette.

Durch die in den Unteransprüchen aufgeführten Maßnahmen sind vorteilhafte Weiterbildungen und Verbesserungen der im Hauptanspruch angegebenen Erfindung möglich.

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Blockschaltbild des Ausführungsbeispiels,
- Fig. 2: ein Flußdiagramm für ein Programm, das für einen Mikrocomputer in dem erfindungsgemäßen Gerät vorgesehen ist,
- Fig. 3: eine Tabelle mit Senderdaten und
- Fig. 4: eine schematische Darstellung des Ortungsvorgangs.

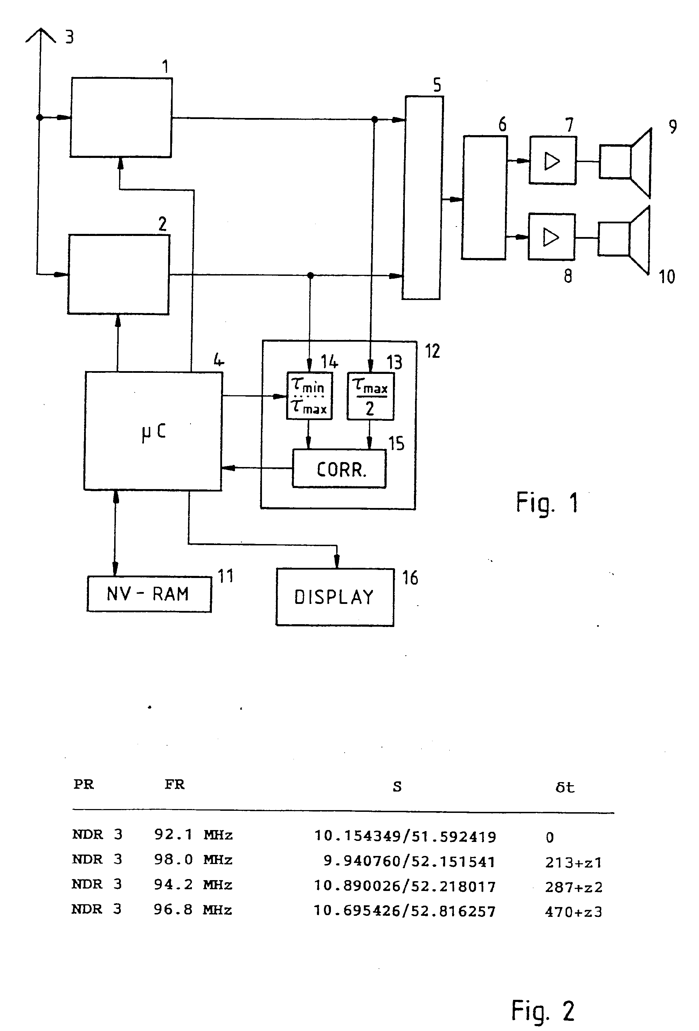

Der in Fig. 1 als Blockschaltbild dargestellte Rundfunkempfänger ist als Autoradio ausgebildet und umfaßt zwei Empfangsschaltungen (Tuner) 1, 2, denen die von einer Antenne 3 empfangenen Signale zugeführt werden. Vorzugsweise sind sogenannte PLL-Tuner vorgesehen, denen von einem Mikrocomputer 4 Daten zur Abstimmung auf jeweils einen Sender zugeleitet werden.

Das dargestellte Autoradio ist in an sich bekannter Weise für einen sogenannten Frequenz-Diversity-Empfang eingerichtet, wozu die Audiosignale beider Tuner 1, 2 über eine Auswerteschaltung 5 wahlweise einer NF-Schaltung zugeführt werden. Diese enthält in an sich bekannter Weise einen Stereodecoder, NF-Verstärker und gegebenenfalls weitere Schaltungen zur Decodierung von Verkehrsfunk-Informationen und RDS-Daten. Über Endstufen 7, 8 sind Lautsprecher 9, 10 angeschlossen.

Ein nichtflüchtiger Speicher 11 enthält bei dem bekannten Autoradio Daten über die Zugehörigkeit der Sender zu sogenannten Programmketten, so daß für einen Diversity-Empfang mit beiden Tunern 1, 2 das gleiche Programm empfangen wird. Demgegenüber enthält der nichtflüchtige Speicher bei dem erfindungsgemäßen Gerät zusätzlich Daten über die Standorte der Sender, beispielsweise im Phi/Lambda-Koordinatensystem, und über die Laufzeitdifferenz zwischen dem jeweiligen Sender und einem Mastersender.

Die von den Tunern 1, 2 abgegebenen Signale werden einer Schaltung 12 zur Bestimmung der Laufzeitdifferenz zugeführt. Derartige Schaltungen sind an sich bekannt und können für beliebige Signale oder für vorgegebene Signale, beispielsweise für Datensignale, ausgelegt werden. Bei dem Ausführungsbeispiel enthält die Schaltung 12 zwei Verzögerungsschaltungen 13, 14, wobei die Schaltung 13 das eine NF-Signal um eine mittlere Zeit verzögert, während die Schaltung 14 mit Hilfe eines vom Mikrocomputer 4 zugeführten Signals zwischen einer minimalen und einer maximalen Verzögerungszeit einstellbar ist.

Die Ausgänge der Verzögerungsschaltungen 13, 14 sind mit Eingängen eines Korrelators 15 verbunden, dessen Ausgangssignal dem Mikrocomputer 4 zuführbar ist. Zur Messung der Korrelation zwischen beiden Signalen ist es vorteilhaft, nicht die vollständigen Signale, sondern beispielsweise die Nulldurchgänge, auszuwerten. Ein geeignetes Verfahren zur Bestimmung von Nulldurchgängen in Audiosignalen und zur Auswertung der zeitlichen Lage verschiedener Nulldurchgänge ist beispielsweise für Zwecke der Musik/Sprache-Erkennung beschrieben in DE 31 02 385 C2 und läßt sich grundsätzlich auch für die Messung der Korrelation im Rahmen der Erfindung anwenden.

An den Mikrocomputer 4 ist ferner eine Anzeigevorrichtung 16 angeschlossen, auf welcher der jeweils ermittelte Standort dargestellt ist. Dieses kann in Form einer alphanumerischen Anzeige oder in Form einer graphischen Anzeige zusammen mit einer kartographischen Darstellung der Umgebung des Fahrzeugs erfolgen.

Fig. 2 zeigt als Beispiel einen Ausschnitt aus einer im nichtflüchtigen Speicher 11 abgelegten Tabelle mit der jeweiligen Frequenz FR, der Programmzugehörigkeit PR und dem Standort S des Senders nach geographischer Länge und Breite, sowie der Laufzeitdifferenz δt zwischen den abgestrahlten Signalen des Mastersenders und des jeweiligen Senders - im folgenden Sendelaufzeitdifferenz genannt. Diese Sendelaufzeitdifferenz besteht aus einem durch den Abstand der Sender voneinander gegebenen Anteil, sowie einer sogenannten Systemlaufzeit z, welche die Laufzeit innerhalb eines jeden Senders zwischen dem Empfang und dem Aussenden der Signale darstellt.

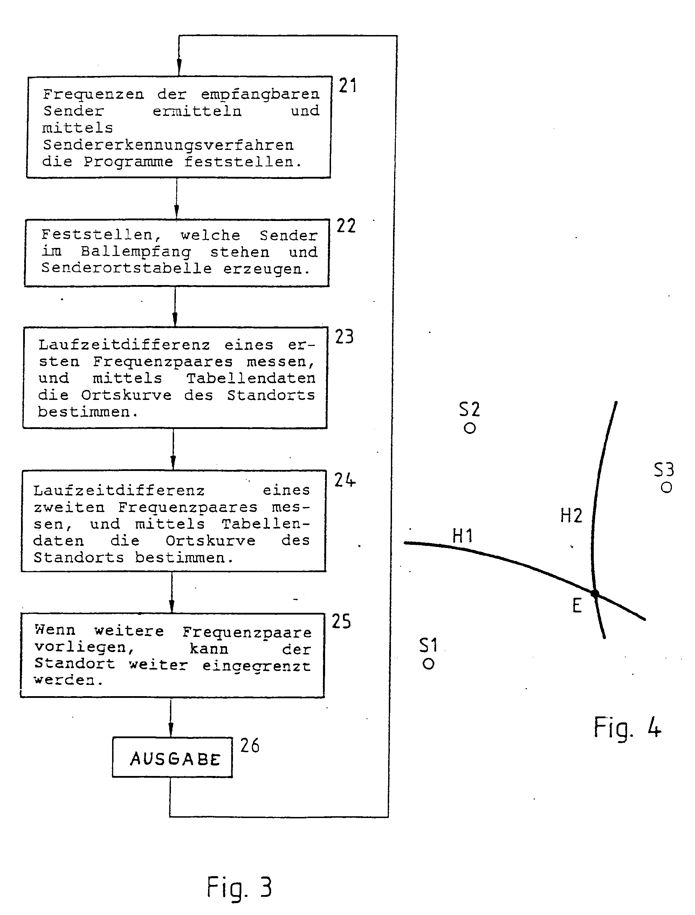

Die Bestimmung des Standortes erfolgt nach dem in Fig. 3 dargestellten Programm des Mikrocomputers 4 (Fig. 1). In einem ersten Programmteil 21 werden die Frequenzen von empfangbaren Sendern durch einen Probeempfang ermittelt. Mittels Sendererkennungsverfahren (beispielsweise durch RDS-Daten) wird festgestellt, welches Programm der jeweilige Sender sendet. Bei 22 wird dann aus der Tabelle abgelesen, welche Sender im Ballempfang stehen. Ferner wird im Programmteil 22 aus der im nichtflüchtigen Speicher 11 (Fig. 1) abgelegten Tabelle im Arbeitsspeicher des Mikrocomputers 4 eine Senderortstabelle erzeugt.

Bei 23 wird die Empfangslaufzeitdifferenz eines ersten Frequenzpaares gemessen und mittels der Tabellendaten die Ortskurve des Standortes bestimmt. Dazu werden die Tuner 1, 2 auf zwei der Sender der Senderortstabelle abgestimmt und die Laufzeit der Verzögerungsschaltung 14 variiert bis die Schaltung 15 eine Korrelation zwischen den zugeführten Signalen feststellt. Die damit ermittelte Empfangslaufzeitdifferenz wird um die in der Tabelle enthaltenen Sendelaufzeitdifferenzen korrigiert und dient zur Berechnung der Ortskurve.

Im Programmteil 24 wird für ein weiteres Frequenzpaar die Empfangslaufzeitdifferenz gemessen und eine weitere Ortskurve bestimmt. Damit liegen die Koordinaten des Standortes vor und können an die Anzeigevorrichtung 16 (Fig. 1) ausgegeben werden. Falls noch weitere empfangbare Sender, die ebenfalls im Ballempfang stehen, vorliegen, kann im Programmteil 25 durch Mittelung zwischen den Schnittpunkten der verschiedenen entstehenden Ortskurven eine höhere Genauigkeit der Standortbestimmung erzielt werden. Danach wird bei 26 das Ergebnis ausgegeben. Die dargestellten Programmschritte werden laufend wiederholt, um den Standort bei Bewegung des Fahrzeugs zu verfolgen.

Fig. 4 zeigt eine schematische Darstellung der Standortbestimmung, wobei drei Sender S1, S2, S3 in einem Empfangsort E empfangbar sind. Zunächst werden die Sender S1 und S2 empfangen und aus den Laufzeitdifferenzen die Hyperbel H1 berechnet. Danach werden die Sender S2 und S3 empfangen, ihre Signale verglichen und die Parabel H2 berechnet. Der Schnittpunkt stellt dann den Standort des Empfängers dar.

Als Rundfunkempfänger sind neben Autoradios feststehende und portable Empfangsgeräte verwendbar, die die entsprechenden Sendefrequenzen empfangen können.

## Patentansprüche

1. Rundfunkempfänger, insbesondere Autoradio, zur Bestimmung des Standortes, mit einem Mikrocomputer und wenigstens zwei Empfangskanälen, die von dem Mikrocomputer steuerbar sind, wobei der Mikrocomputer ausgebildet ist, aus der Laufzeit von empfangenen Rundfunksignalen verschiedener Radiosender den Standort zu bestimmen, und mit einem Datenspeicher, dadurch gekennzeichnet, daß der Datenspeicher eine Tabelle enthält, in der wenigstens die Frequenzen (FR), die Standorte (S) und Sendelaufzeitdifferenzen der Radiosender (S1, S2, S3) gespeichert sind, die eine gleiche Programmzugehörigkeit (Ballempfang) aufweisen, wobei eine Sendelaufzeitdifferenz die Laufzeit zwischen dem jeweiligen Sender und einem Mastersender sowie die Laufzeit innerhalb des jeweiligen Senders umfassen, und daß der Rundfunkempfänger auf zwei dieser Sender abgestimmt wird und ausgebildet ist, eine Empfangslaufzeitdifferenz der empfangenen Signale dieser zwei Sender zu ermitteln, des weiteren die Empfangslaufzeitdifferenz eines zweiten Senderpaares zu ermitteln und aus den Meßergebnissen unter Berücksichtigung der jeweiligen Sendelaufzeitdifferenz jeweils Linien möglicher Standorte zu bestimmen und den Schnittpunkt der Linien zu berechnen.

2. Rundfunkempfänger nach Anspruch 1, dadurch gekennzeichnet, daß die Sender (S1, S2, S3) im Ultrakurzwellenbereich arbeiten.

3. Rundfunkempfänger nach Anspruch 1 oder 2, dadurch gekennzeichnet, daß nach einem im Mikrocomputer (4) gespeicherten Programm zunächst festgestellt wird, welche von denjenigen Sendern (S1, S2, S3), deren Daten im Speicher abgelegt sind, im Ballempfang stehen und ausreichend gut empfangbar sind.

4. Rundfunkempfänger nach Anspruch 3, dadurch gekennzeichnet, daß durch den Empfang weiterer Senderpaare weitere Linien möglicher Standorte berechnet werden und daß zwischen den Schnittpunkten gemittelt wird.

5. Rundfunkempfänger nach Anspruch 1, dadurch gekennzeichnet, daß die Messung der Empfangslaufzeitdifferenz durch eine steuerbare Verzögerung eines der Signale gegenüber dem anderen unter gleichzeitiger Messung der Korrelation zwischen dem verzögerten und dem anderen Signal erfolgt und daß die bei einer Korrelation vorliegende Verzögerung die Empfangslaufzeitdifferenz darstellt.

6. Rundfunkempfänger nach Anspruch 1, dadurch gekennzeichnet, daß zur Messung der Empfangslaufzeitdifferenz mit vorgegebenen von den Sendern ausgestrahlten Signalen, beispielsweise mit RDS-Signalen, bei einer vorgegebenen Flanke der jeweils empfangenen Signale ein Zähler gestartet und bei Empfang der entsprechenden Flanke des anderen Signals angehalten wird.

## Claims

1. Radio receiver, in particular a car radio, for determining position, having a microcomputer and at least two receiving channels which can be controlled by the microcomputer, the microcomputer being designed to determine position from the propagation time of received radio signals of different radio transmitters, and having a data memory, characterized in that the data memory contains a table in which at least the frequencies (FR), the positions (S) and the transmission propagation time differences of the radio transmitters (S1, S2, S3) are stored which have an identical station association (rebroadcast reception), a transmission propagation time comprising the propagation time between the respective transmitter and a master transmitter as well as the propagation time inside the respective transmitter, and in that the radio receiver is tuned to two of these transmitters and designed to determine a reception propagation time difference of the received signals of these two transmitters, and further to determine the reception propagation time difference of a second pair of transmitters, and respectively to determine from the measurement results while taking account of the respective transmission propagation time difference lines of possible positions, and to calculate the point of intersection of the lines.

2. Radio receiver according to Claim 1, characterized in that the transmitters (S1, S2, S3) operate in the VHF region.

3. Radio receiver according to Claim 1 or 2, characterized in that it is first established according to a program stored in the microcomputer (4) which of those transmitters (S1, S2, S3) whose data are stored in the memory are within rebroadcast reception and can be received adequately well.

4. Radio receiver according to Claim 3, characterized in that further lines of possible positions are calculated by the reception of further pairs of transmitters, and in that averaging is performed between the points of intersection.

5. Radio receiver according to Claim 1, characterized in that the measurement of the reception propagation time difference is performed by means of a controllable delay of one of the signals with respect to the other accompanied by simultaneous measurement of the correlation between the delayed signal and the other one, and in that the delay present for a correlation represents the reception propagation time difference.

6. Radio receiver according to Claim 1, characterized in that in order to measure the reception propagation time difference by means of prescribed signals emitted by the transmitters, for example by means of RDS signals, a counter is started in the case of a prescribed edge of the respectively received signals and stopped in the case of reception of the corresponding edge of the other signal.

## Revendications

1. Récepteur radiophonique, notamment autoradio pour déterminer une position, comportant un micro-ordinateur et au moins deux canaux de réception commandés par le micro-ordinateur, ce dernier étant réalisé de façon qu'à partir du temps de parcours des signaux radio reçus en provenance de différents émetteurs radio il puisse définir la position, ainsi qu'une mémoire de données, récepteur caractérisé en ce que la mémoire de données contient un tableau dans lequel sont enregistrées au moins les fréquences (FR), les emplacements (S) et les différences des temps de parcours des émetteurs de radio (S1, S2, S3), et qui appartiennent au même programme (réception de type « balles »), une différence de temps de parcours d'émission concernant le temps de parcours entre l'émetteur respectif et un émetteur maître ainsi que le temps de parcours dans l'émetteur respectif et le récepteur radio est accordé et est conçu pour de tels émetteurs, on détermine une différence de temps de parcours de réception pour les signaux reçus à partir des deux émetteurs ainsi que la différence de temps de parcours d'une seconde paire d'émetteurs et à partir des résultats des mesures et en tenant compte de la différence de temps de parcours d'émetteurs, respectifs, on définit chaque fois les lieux géométriques possibles de la position et on calcule le point d'intersection des courbes.

2. Récepteur radio selon la revendication 1, caractérisé en ce que les émetteurs (S1, S2, S3) fonctionnent dans le domaine des ondes ultra courtes.

3. Récepteur radio selon la revendication 1 ou 2, caractérisé en ce qu'après un programme mis en mémoire dans un ordinateur (4) on détermine tout d'abord celui des émetteurs (S1, S2, S3) dont les données sont inscrites dans la mémoire, qui coopère en réception dite « de balles » et dont la réception est suffisamment bonne.

4. Récepteur radio selon la revendication 3, caractérisé en ce que par la réception d'autres paires d'émetteurs on calcule d'autres positions possibles et on fait une moyenne entre les points d'intersection.

5. Récepteur radio selon la revendication 1, caractérisé en ce que la mesure de la différence de temps de parcours se fait en appliquant un retard commandé à l'un des signaux par rapport à l'autre tout en mesurant la corrélation entre le signal retardé et l'autre signal et le retard existant dans une corrélation représente la différence de temps de parcours de réception.

6. Récepteur radio selon la revendication 1, caractérisé en ce que pour mesurer la différence de temps de parcours avec des signaux émis de manière prédéterminée par les émetteurs, par exemple des signaux RDS, avec un flanc prédéterminé des signaux respectivement reçus, on démarre un compteur et on arrête celui-ci à la réception du flanc correspondant de l'autre signal.
